# EUROPEAN PATENT APPLICATION

(11) **EP 1 013 738 A1**
(43) Date of publication of application: **28.06.2000**
(21) Application number: 99125219.8
(22) Date of filing: 17.12.1999
(51) Int. Cl.: C09K 5/04, G01M 3/20

(54) **Vapor compression type refrigeration cycle**

(30) Priority: 25.12.1998 JP 36972298
(71) Applicant: SANDEN CORPORATION, Isesaki-shi Gunma 372 (JP)
(72) Inventor: Komatsu, Shunji, c/o Sanden Corporation, Isesaki-shi, Gunma 372 (JP)
(74) Representative: Prüfer, Lutz H., Dipl.-Phys.

(57) **Abstract**

In a vapor compression type refrigeration cycle (1) using carbon dioxide as a refrigerant, the carbon dioxide is added with at least one of an odorant and a colorant. It is preferable that the odorant has at least one of methyl mercaptan, ethyl mercaptan, propyl mercaptan, butyl mercaptan, dimethyl thioether, diethyl thioether, picoline, diacetyl, methyl acrylate, ethyl acrylate, propyl acrylate, methyl methacrylate, allyl methacrylate, ethyl propionate, methyl butyrate, butene, vinylacetylene, hexine, o-methoxyphenol, and ammonia. It is also preferable that the colorant has at least one of azo pigments such as β-naphthol series, β-oxynaphthoic acid series, naphthol AS series, acetoacetoanilide series, and pyrazolone series.

## Description

### Background of the Invention:

The present invention relates to a vapor compression type refrigeration cycle which can suitably be used as an air conditioner for an automobile, an industry or a home.

At the present day when the prevention of global warming due to a Freon gas is worldwide required, a vapor compression type refrigeration cycle in which, for example, CO₂ (carbon dioxide) is used has been suggested as one of measures against the use of the refrigeration medium Freon in the field of the vapor compression type refrigeration cycle in which Freon has heretofore been used as a refrigeration medium.

However, according to the comparison between the carbon dioxide and the Freon gas as the refrigeration medium which can be used in the vapor compression type refrigeration cycle, the Freon gas is less harmful, but the carbon dioxide is harmful, and if a human inhales a certain amount of the carbon dioxide, he is badly affected by this gas.

Concretely, the concentration of the carbon dioxide in air is usually about 0.04%, but when this concentration is in excess of 1.5%, it has an influence on calcium-phosphorus metabolism sometimes, and when it is in excess of 2.0%, breath becomes deep, and the amount of the air to be inhaled per breath increases as much as about 30%. Furthermore, when the concentration of the carbon dioxide in the air is in excess of 3.0%, the change of physiological function appears as the changes of weight, blood pressure and heart rate, so that the deterioration of workability occurs. When this concentration is in excess of 4.0%, the breath becomes further deep, and the number of the breaths increases and the human becomes a light gasp state. In addition, when the carbon dioxide concentration is in excess of 5.0%, the human becomes an extremely labored breathing state, and most of the humans cannot withstand such a state any more.

As understood from the above, the concentration of several percent of the carbon dioxide in the air has a harmful influence on the human, and hence, if a Vapor compression type refrigeration cycle is used as an air conditioner for an automobile and the refrigeration medium leaks in the closed narrow space in the automobile, the human will be exposed to a very dangerous and fatal situation. In addition, when the leakage of the refrigeration medium occurs in the Vapor compression type refrigeration cycle, there is a problem that such an accident cannot early be sensed because carbon dioxide of the refrigeration medium is colorless and odorless.

### Summary of the Invention:

It is therefore an object of the present invention to provide a vapor compression type refrigeration cycle which permits early sensing the leakage of a refrigeration medium to prevent an unexpected accident.

Other objects of the present invention will become clear as the description proceeds.

According to the present invention, there is provided a vapor compression type refrigeration cycle using carbon dioxide as a refrigerant, characterized in that the carbon dioxide is added with at least one of an odorant and a colorant.

It may be arranged that the odorant comprises at least one of methyl mercaptan, ethyl mercaptan, propyl mercaptan, butyl mercaptan, dimethyl thioether, diethyl thioether, picoline, diacetyl, methyl acrylate, ethyl acrylate, propyl acrylate, methyl methacrylate, allyl methacrylate, ethyl propionate, methyl butyrate, butene, vinylacetylene, hexine, o-methoxyphenol, and ammonia.

It may be arranged that the odorant has a concentration of about 1 to about 1000 ppm.

It may be arranged that the carbon dioxide is further added with a dissolution assistant for the odorant.

It may be arranged that the colorant comprises at least one of azo pigments such as β-naphthol series, β -oxynaphthoic acid series naphthol AS series, acetoacetoanilide series, and pyrazolone series.

It may be arranged that the carbon dioxide is further added with a fluorescent dye.

It may be arranged that the carbon dioxide is further added with a fluorescent pigment.

It may be arranged that the carbon dioxide is further added with a dissolution assistant for the colorant.

It may be arranged that the carbon dioxide is further added with a lubricant.

It may be arranged that the vapor compression type refrigeration cycle includes a compressor, a radiator, and an evaporator which are connected to one another to form a closed circuit, the carbon dioxide being circulated through the closed circuit with a controlled temperature and pressure.

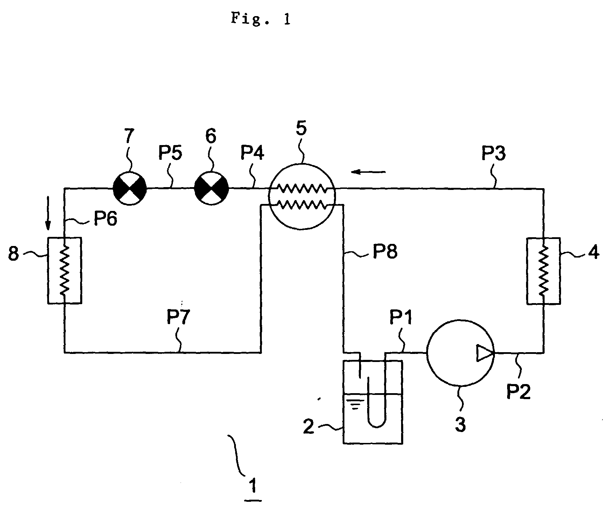

### Brief Description of the Drawing:

Figure is a circuit diagram of a vapor compression type refrigeration cycle according to an embodiment of the present invention.

### Description of the Preferred Embodiment:

With reference to the figure, description will be made as regard a vapor compression type refrigeration cycle according to an embodiment of the present invention.

The vapor compression type refrigeration cycle (hereinafter referred to simply as "the refrigeration cycle") is designated by a reference numeral 1 and can be included in an air conditioner system suitably mounted on a vehicle such as an automobile in the manner known in the art.

In the vapor compression type refrigeration cycle, CO₂ (carbon dioxide) is used as a refrigeration medium. The vapor compression type refrigeration cycle comprises a gas-liquid separator 2 for separating this refrigeration medium into a liquid portion and a gaseous portion and then storing them therein, a compressor 3 for compressing the gaseous refrigeration medium from the gas-liquid separator 2, a radiator (a gas cooler) 4 for carrying out heat exchange between the refrigeration medium compressed by this compressor 3 and the open air or the like to cool it, an evaporator 8 for evaporating the refrigeration medium from the gas cooler 4 and then feeding it to the compressor 3, an internal heat exchanger 5 for carrying out heat exchange between the refrigeration medium at an outlet of the gas cooler 4 and the refrigeration medium at an outlet of the evaporator 8, a high pressure control valve 6, disposed on the downstream side of the internal heat exchanger 5, for controlling the pressure of the refrigeration medium from the gas cooler 4, and a superheat degree control valve 7, disposed on the downstream side of the high pressure control valve 6, for regulating the flow rate of the refrigeration medium from the gas cooler 4 to the evaporator 8 so that the superheat degree of the carbon dioxide at the inlet of the compressor 3 may be a predetermined value.

In the refrigeration cycle 1, the gas-liquid separator 2 and the compressor 3 are connected by a pipe P1; the compressor 3 and the gas cooler 4 are connected by a pipe P2; the gas cooler 4 and the internal heat exchanger 5 are connected by a pipe P3; the internal heat exchanger 5 and the high pressure control valve 6 are connected by a pipe P4; the high pressure control valve 6 and the superheat degree control valve 7 are connected by a pipe P5; the superheat degree control valve 7 and the evaporator 8 are connected by a pipe P6; the evaporator 8 and the internal heat exchanger 5 are connected by a pipe P7; and the internal heat exchanger 5 and the gas-liquid separator 2 are connected by a pipe P8.

The gas-liquid separator 2 feeds gaseous carbon dioxide to the compressor 3. The gas-liquid separator 2 separates the carbon dioxide flowing from the evaporator 8 via the internal heat exchanger 5 into liquid carbon dioxide to the gaseous carbon dioxide and stores them therein. The compressor 3 compresses the gaseous carbon dioxide from the gas-liquid separator 2 to its critical pressure or more and discharges it therefrom. The gas cooler 4 performs the heat exchange between the carbon dioxide compressed to the critical pressure or more by the compressor 3 and an external fluid such as the open air to cool it. The internal heat exchanger 5 performs the heat exchange between carbon dioxide flowing from the gas cooler 4 and the carbon dioxide flowing from the evaporator 8. The high pressure control valve 6 reduces the pressure of the carbon dioxide from the gas cooler 4 through the internal heat exchanger 5 to control the pressure on the outlet side of the internal heat exchanger 5 in compliance with the temperature of the carbon dioxide on the outlet side (on the side of the pipe P1) of the internal heat exchanger 5. The superheat degree control valve 7 regulates the flow rate of the carbon dioxide flowing into the evaporator 8 so that a superheat degree of the carbon dioxide at its introduction on the inlet side of the compressor 3 may be a predetermined value.

The evaporator 8 evaporates the carbon dioxide flowing from the superheat degree control valve 7, whereby the air in the room of the automobile is deprived of evaporation latent heat to cool the air in the automobile room.

In this refrigeration cycle 1, the carbon dioxide of the refrigeration medium fed from the gas-liquid separator 2 is compressed to its critical pressure or more by the compressor 3 and then discharged therefrom. The carbon dioxide flows into the gas cooler 4 through the pipe P2. Afterward, the carbon dioxide is circulated through the internal heat exchanger 5, the high pressure control valve 6, the superheat degree control valve 7, the evaporator 8, the internal heat exchanger 5, the gas-liquid separator 2 and the compressor 3 in this order.

Consequently, in the refrigeration cycle 1, the heat exchange is performed between the carbon dioxide having a relatively high temperature (e.g., about 40°C to about 50°C) flowing from the gas cooler 4 and the carbon dioxide having a relatively low temperature (e.g., about 5°C to about 10°C) flowing from the evaporator 8. So that, the temperature of the carbon dioxide from the outlet of the evaporator 8 rises and is then returned to the gas-liquid separator 2. Accordingly, in the refrigeration cycle 1, COP (coefficient of performance) is improved in proportion to a heat exchange quantity (kcal/hr) in the internal heat exchanger 5 owing to the cooling of the refrigeration medium at the outlet of the gas cooler.

Here, the under-mentioned odorant and colorant are added to the carbon dioxide for use in the refrigeration cycle 1.

That is to say, the odorant is a substance having a smell which can be sensed by the smell sense of a human, and examples of the odorant include methyl mercaptan, ethyl mercaptan, propyl mercaptan, butyl mercaptan, dimethyl thioether, diethyl thioether, picoline, diacetyl, methyl acrylate, ethyl acrylate, propyl acrylate, methyl methacrylate, allyl methacrylate, ethyl propionate, methyl butyrate, butene, vinylacetylene, hexine, o-methoxyphenol and ammonia. They may be added to the carbon dioxide singly or in the form of a mixture of two or more thereof in an amount suitable for a predetermined smell. Concretely, it is preferred that the odorant is contained at a concentration of about 1 to about 1000 ppm in consideration of the smell sense ability of the human.

Furthermore, the colorant having a hue which can easily be discriminated by the sight sense of the human is selected and added. Particularly preferably, β -naphthol series, β-oxynaphthoic acid series, naphthol AS series, acetoacetoanilide series and pyrazolone series which are azo pigments may be added to the carbon dioxide singly or in the form of a mixture of two or more thereof in an amount suitable for a predetermined color. Moreover, it is preferable that a fluorescent dye or a fluorescent pigment is added to the carbon dioxide, because its addition makes the color more discriminating owing to the generation of fluorescence to obtain a more desirable effect.

In the refrigeration cycle 1, the addition of such an odorant and colorant to the carbon dioxide can secure a high safety during operation. That is to say, in the worst case that, for example, the carbon dioxide leaks from the evaporator 8 by a strong shock such as collision, vibration for a long time or another cause and flows into the closed room of an automobile, the leakage of conventional carbon dioxide cannot be discovered so long as an extremely high concentration of colorless and odorless carbon dioxide is not reached, so that the leaked carbon dioxide is liable to badly affect the human. However, according to this refrigeration cycle 1, a bad smell is released from a leakage position and the colored gas is jetted from the leakage position, and therefore a driver or an outside person can sense the odor and the color by the smell sense and the sight sense of the human and can take measures of opening windows of the automobile or the like, whereby the carbon dioxide can be discharged out of the room to prevent an unexpected accident.

In the above-mentioned embodiment, both of the odorant and the colorant are added to the carbon dioxide, but only one of the odorant and the colorant may be added. In a dark room, it is difficult to sense the color sometimes, and on the other hand, the smell sense is dull because of a bad condition due to a cold sometimes. Furthermore, another person which is at a position apart from the automobile room can scarcely sense the smell of the odorant. Accordingly, it is more effective to add both of the odorant and the colorant to the carbon dioxide. Needless to say, a dissolution assistant for the colorant, a dissolution assistant for the odorant, a lubricant and the like can suitably be added to the carbon dioxide.

Incidentally, the present invention is not limited to the above-mentioned circuit constitution, and the present invention can cover, for example, a circuit constituted without using the internal heat exchanger, and other variously constituted circuits. In the above-mentioned embodiment, the refrigeration cycle 1 is used for the automobile in which the leakage of the refrigeration medium is liable to occur, but needless to say, the present invention can be applied to general homes, industries and other various uses.

As described above in detail, according to the present invention, an odorant and/or a colorant is added to carbon dioxide of the refrigeration medium, whereby the leakage of the refrigeration medium becomes sensible by the smell sense and/or the sight sense of a human. In consequence, it is possible to provide a vapor compression type refrigeration cycle in which the leakage of the refrigeration medium can be sensed at an early stage to prevent an unexpected accident.

## Claims

1. A vapor compression type refrigeration cycle (1) using carbon dioxide as a refrigerant, characterized in that said carbon dioxide is added with at least one of an odorant and a colorant.

2. A vapor compression type refrigeration cycle as claimed in claim 1, wherein said odorant comprises at least one of methyl mercaptan, ethyl mercaptan, propyl mercaptan, butyl mercaptan, dimethyl thioether, diethyl thioether, picoline, diacetyl, methyl acrylate, ethyl acrylate, propyl acrylate, methyl methacrylate, allyl methacrylate, ethyl propionate, methyl butyrate, butene, vinylacetylene, hexine, o-methoxy-phenol, and ammonia.

3. A vapor compression type refrigeration cycle as claimed in claim 1 or 2, wherein said odorant has a concentration of about 1 to about 1000 ppm.

4. A vapor compression type refrigeration cycle as claimed in one of claims 1 to 3, wherein said carbon dioxide is further added with a dissolution assistant for said odorant.

5. A vapor compression type refrigeration cycle as claimed in one of claims 1 to 4, wherein said colorant comprises at least one of azo pigments such as β-naphthol series, β-oxy-naphtoic acid series, naphtol AS series, acetoacetoanilide series and pyrazolone series.

6. A vapor compression type refrigeration cycle as claimed in one of claims 1 to 5, wherein said carbon dioxide is further added with a fluorescent dye.

7. A vapor compression type refrigeration cycle as claimed in one of claims 1 to 6, wherein said carbon dioxide is further added with a fluorescent pigment.

8. A vapor compression type refrigeration cycle as claimed in one of claims 1 to 7, wherein said carbon dioxide is further added with a dissolution assistant for said colorant.

9. A vapor compression type refrigeration cycle as claimed in one of claims 1 to 8, wherein said carbon dioxide is further added with a lubricant.

10. A vapor compression type refrigeration cycle as claimed in one of claims 1 to 9, including a compressor (3), a radiator (4), and an evaporator (8) which are connected to one another to form a closed circuit, said carbon dioxide being circulated through said closed circuit with a controlled temperature and pressure.
